# EUROPÄISCHE PATENTANMELDUNG

(11) **EP 1 053 849 A2**
(43) Veröffentlichungstag der Anmeldung: **22.11.2000**
(21) Anmeldenummer: 00109467.1
(22) Anmeldetag: 04.05.2000
(51) Int. Cl.: B29C 44/04, B29C 44/34, B29C 35/12

(54) **Verfahren und Vorrichtung zum Herstellen eines Kunststoffteils**

(30) Priorität: 11.05.1999 DE 19921742
(71) Anmelder: Möller Plast GmbH, 33649 Bielefeld (DE)
(72) Erfinder: Märtins, Ronald, Dr., 33803 Steinhagen (DE); Salamon, Marcel, 48149 Münster (DE)
(74) Vertreter: Schirmer, Siegfried, Dipl.-Ing.

(57) **Zusammenfassung**

Verfahren zum Herstellen eines Kunststoffteils oder Kunststoffverbundteils, wobei ein Ausgangsmaterial (6), das mindestens eine Schicht eines durch hochfrequente elektrische Energie schäumbaren Materials umfaßt, zwischen zwei oder mehreren Elektroden (1,2) angeordnet wird, und ein elektrisches Wechselfeld an die Elektroden angelegt wird, um Energie in das schäumbare Material einzukoppeln, wobei in einer ersten Variante eine durch schäumbares Material gebildete Oberfläche des Ausgangsmaterials durch Kontakt mit einem wärmeabführenden Formelement gekühlt wird, so daß eine unverschäumte oder wenig verschäumte Oberflächenzone erzeugt wird, und wobei in einer zweiten Variante das Ausgangsmaterial eine Deckschicht aufweist, die aus polarem Material besteht und ebenfalls erwärmt wird, so daß das schäumbare Material insbesondere auch in einem der Deckschicht zunächstliegenden Bereich vollständig aufgeschäumt wird, sowie Vorrichtung zum Herstellen eines Kunststoffteils.

## Beschreibung

Die Erfindung betrifft ein Verfahren zum Herstellen eines Kunststoffteils oder Kunststoffverbundteils, mit den Schritten a) Anordnen eines mindestens eine Schicht eines durch hochfrequente elektrische Energie schäumbaren Materials umfassenden Ausgangsmaterials in einem Zwischenraum zwischen zwei oder mehreren, einander gegenüberstehenden, elektrisch leitenden Elektroden, und b) Anlegen eines hochfrequenten elektrischen Wechselfeldes an die Elektroden, um Energie in das eingebrachte Ausgangsmaterial und insbesondere in das schäumbare Material einzukoppeln.

Die Erfindung betrifft ferner eine Vorrichtung, die sich insbesondere zum Durchführen eines derartigen Verfahrens eignet.

Aus der CH 417055 ist ein Verfahren zur Herstellung von Formkörpern mittels Beheizung durch ein hochfrequentes elektrisches Feld bekannt. Aus der DE 3724316 ist ein Verfahren zur Herstellung von Schaumkunststoffen mittels dielektrischer Beheizung bekannt. Aus der DE 1236174 ist ein Verfahren und eine Vorrichtung zum kontinuierlichen Herstellen von Tafeln bekannt, die als geschichtete Materialien mit Schaumkern auf Walzenbetten hergestellt werden.

Die Erfindung beruht auf der an sich bekannten Möglichkeit, Materialien wie bspw. schäumbare Kunststoffe durch Einbringen in ein hochfrequentes elektromagnetisches Wechselfeld zu erwärmen, wobei aufgrund der Energieeinkopplung bspw. Polymere erwärmt oder aufgeschmolzen und sonstige physikalische Prozesse oder chemische Reaktionen aktiviert und beschleunigt werden.

Die Aufnahme von Energie aus dem Wechselfeld wird durch Schwingungsanregung der polaren Strukturen im Molekülverbund des Kunststoffs bzw. Polymers erreicht. Je nach Frequenz der verwendeten Wechselfelder unterscheidet man verschiedene Verfahrenstechniken. Die Wahl des Frequenzbereiches wirkt sich unter anderem aus auf die Techniken zur Erzeugung, Weiterleitung, Messung und Anwendung der zugehörigen elektromagnetischen Felder.

Die wichtigsten Verfahrenstechniken sind zum einen die Hochfrequenztechnik mit Frequenzen im Bereich von ungefähr 100 kHz bis 1 GHz (etwas konservativer 300 kHz bis 300 MHz) und zum anderen die Mikrowellentechnik mit Frequenzen im Bereich von 300 MHz bis 300 GHz.

Im Hochfrequenzbereich werden die elektromagnetischen Wechselfelder durch herkömmliche Schwingkreise (Kombination aus Spule und Kondensator) erzeugt und auf geeigneten Leiterkabeln oder (im wesentlichen) an der Oberfläche von metallischen Körpern transportiert. Sie können mit geeigneten Antennen in den freien Raum abgestrahlt (Funk, Radio, Fernsehen) oder in Kondensatoranordnungen gespeichert werden. Letztere Anordnung ist für die Einkopplung der Energie des Wechselfeldes in ein Polymer von besonderem Interesse.

Im Mikrowellenbereich können die Wechselfelder von speziellen Quellen (Klystron, Magnetron, Gyrotron) erzeugt und mittels einer Antenne in den freien Raum (Radarüberwachung, Geschwindigkeits- und Abstandsmessung) abgestrahlt werden. Innerhalb metallischer Hohlkörper geeigneter Ausmaße werden Mikrowellen eingeschlossen und können so kontrolliert transportiert werden (Hohlleiter). Zur Heizung eines metallischen Materials (durch Indukion) oder eines dielektrischen Materials (durch Absorption) bringt man diese in einen geeigneten metallischen Hohlköper ein (Mikrowellenofen zur Lebensmittelerwärmung und -konservierung, in der Medizintechnik und zum Trocknen von verschiedenen Materialien). Dementsprechend können auch Polymere durch Mikrowellen angeregt werden.

Bei konventioneller Heizung wird die Wärmeenergie durch Wärmefluß von der Oberfläche infolge eines Temperaturgradienten von außen zugeführt. Eine schnelle Aufheizung ist nur möglich, wenn die Oberflächentemperatur deutlich oberhalb der gewünschten Temperatur liegt.

Die Kapazität eines Plattenkondensators ist umgekehrt proportional zum Abstand der Planen. Dementsprechend steigt bei gegebener Spannung der Energieinhalt des Feldes umgekehrt proportional mit der Verringerung des Plattenabstandes an. Die Energiedichte als maßgebliche Größe für den lokalen Energieeintrag steigt sogar quadratisch mit fallendem Plattenabstand.

Die Erfindung hat sich zur Aufgabe gestellt, die bekannten Verfahren und Vorrichtungen zur Aufheizung mittels elektromagnetischen Feldern dahingehend weiterzuentwickeln, daß möglichst gute haptische und optische Eigenschaften geschäumter Kunststoffteile mit möglichst geringem Fertigungsaufwand hergestellt werden können.

Diese Aufgabe wird erfindungsgemäß in verfahrensmäßiger Hinsicht durch ein Verfahren zum Herstellen eines Kunststoffteils oder Kunststoffverbundteils gelöst, mit den Schritten a) Anordnen eines mindestens eine Schicht eines durch hochfrequente elektrische Energie schäumbaren Materials aufweisenden Ausgangsmaterials in einem Zwischenraum zwischen zwei oder mehreren, einander gegenüberstehenden, elektrisch leitenden Elektroden, und b) Anlegen eines elektrischen Wechselfeldes an die Elektroden, um Energie in das eingebrachte Ausgangsmaterial und insbesondere in das schäumbare Material einzukoppeln, wobei sich das Verfahren dadurch auszeichnet, daß eine durch schäumbares Material gebildete Oberfläche des Ausgangsmaterials zumindest bereichsweise während und/oder nach dem Anlegen des Wechselfeldes durch Kontakt mit einem wärmeabführenden Formelement auf einer Temperatur gehalten (in der Regel gekühlt) wird, bei der im wesentlichen kein Aufschäumen erfolgt, so daß eine unverschäumte oder wenig verschäumte Oberflächenzone erzeugt wird.

Die Aufgabe der Erfindung wird ferner gelöst durch ein Verfahren zum Herstellen eines Kunststoffteils oder Kunststoffverbundteils, mit den Schritten a) Anordnen eines mindestens eine Schicht eines durch hochfrequente elektrische Energie schäumbaren Materials umfassenden Ausgangsmaterials in einem Zwischenraum zwischen zwei oder mehreren, einander gegenüberstehenden, elektrisch leitenden Elektroden, wobei das Ausgangsmaterial eine ein- oder mehrschichtige Deckschicht, insbesondere Dekorschicht, aufweist, die ganz oder teilweise aus einem polaren Material besteht und/oder leitende Anteile oder Zusätze aufweist und b) Anlegen eines elektrischen Wechselfeldes an die Elektroden, um Energie in das eingebrachte Ausgangsmaterial und insbesondere in das schäumbare Material und in die Deckschicht einzukoppeln, so daß aufgrund der dielektrischen Erwärmung der Deckschicht das schäumbare Material insbesondere auch in einem der Deckschicht zunächstliegenden Bereich vollständig aufgeschäumt wird.

In vorrichtungsmäßiger Hinsicht wird die Aufgabe der Erfindung durch eine Vorrichtung gelöst, insbesondere zum Durchführen des erfindungsgemäßen Verfahrens, mit zwei oder mehr einander gegenüberstehenden, elektrisch leitenden Elektroden mit einem Zwischenraum dazwischen, die zum Erzeugen eines hochfrequenten elektrischen Wechselfeldes in dem Zwischenraum mit einem Hochfrequenzgenerator zum Erzeugen einer hochfrequenten Spannung verbunden sind, wobei mindestens eine Elektrode bewegbar gehalten ist, um die Größe des Zwischenraums zu verändem, wobei sich die Vorrichtung dadurch auszeichnet, daß mindestens eine Elektrode geteilt ausgeführt ist und die einzelnen Teile einzeln oder gemeinsam bewegbar sind, wobei mindestens eine elektrisch leitende, mit einer (jeweiligen) Elektrode leitend verbundene Abdeckung vorhanden ist, um die zwischen beweglichen Elektrodenteilen entstehenden Lücken mechanisch und elektrisch zu schließen.

Bevorzugte Weiterbildungen der Erfindung sind in den Unteransprüchen aufgezeigt.

Die Erfindung eignet sich zur Herstellung von ein- oder mehrschichtigen Kunststoffteilen, insbesondere mehrschichtigen Schaum-Verbundteilen, die aus den folgenden Einzelkomponenten bestehen können: (1) einem steifen ein- oder mehrschichtigen Trägerteil, (2) einer durch Aufschäumung eine schäumbaren Polymers zu erzeugenden, weichen oder harten, ein- oder mehrschichtigen Schaumschicht, und ggf. (3) einer ein- oder mehrschichtigen Deck- bzw. Oberflächenschicht, die als Dekorschicht aus einem Dekormaterial bestehen kann.

Die zwischen dem Dekormaterial und dem Träger befindliche Schaumschicht kann die Haptik ( 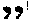 Soft-Touch") des Werkstücks verbessern und ferner zur Energie- bzw. Schallabsorption dienen, beispielsweise bei Anwendung erfindungsgemäß hergestellter Teile bzw. Verbundteile im Fahrzeugbau.

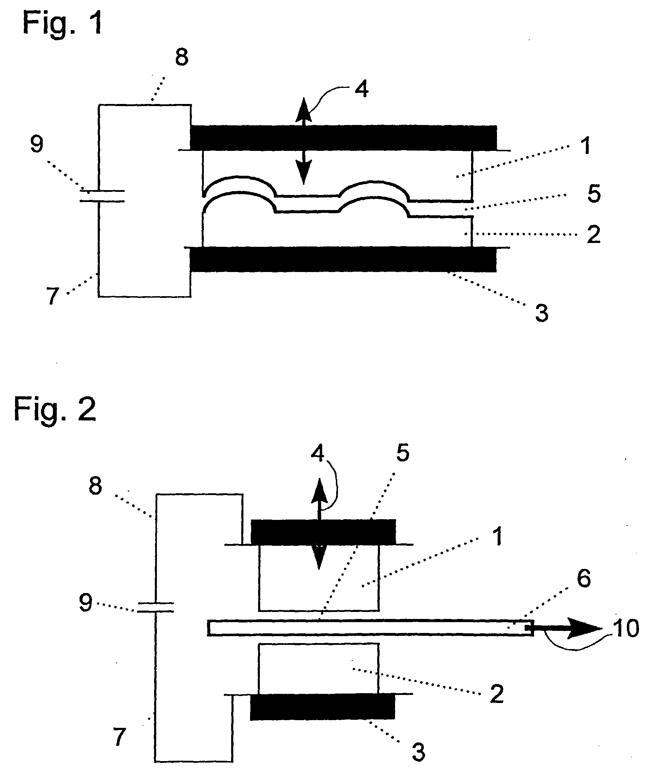

Weitere Merkmale und Vorteile der Erfindung ergeben sich aus der nachfolgenden Beschreibung eines Ausführungsbeispiels der Erfindung anhand einer Vorrichtung zum Durchführen des Verfahrens, wobei auf eine Zeichnung Bezug genommen wird, in der
Fig. 1 bis 4 schematisierte Seitenansichten verschiedener Ausführungsformen einer Vorrichtung zum Durchführen des erfindungsgemäßen Verfahrens zeigen.

Die in Fig. 1 dargestellte Vorrichtung weist zwei flächig einander gegenüberstehende, plattenförmig ausgebildete Elektroden 1, 2 auf, wobei eine (untere) Elektrode 2 auf einem Sockel 3 ortsfest angeordnet ist, während die (obere) Elektrode 1 mittels einer nicht dargestellten Antriebseinrichtung in ihrer Höhe veränderbar ist (Pfeil 4), so daß der gegenseitige Abstand der Elektroden 1 und 2 und damit die Größe des dazwischen befindlichen Zwischenraums 5 veränderbar ist.

Die beiden Elektroden 1, 2 sind über Leitungen 7, 8 mit den Ausgängen eines Hochfrequenzgenerators 9 verbunden, mit dem eine hochfrequente Wechseispannung veränderlicher Größe (Amplitude) und/oder Frequenz an die Elektroden angelegt werden kann.

Die einander zugewandten Flächen der Elektroden sind so geformt, daß der zwischen ihnen gebildete Zwischenraum 5 der gewünschten (unregelmäßigen) Form des herzustellenden Kunststoffteils entspricht. Der lokale Abstand der Elektroden ist zweckmäßigerweise im wesentlichen konstant und so gering wie möglich, d.h. so gering wie es die Form des Ausgangsteils erlaubt, um einen möglichst guten Wirkungsgrad zu erzielen. Idealerweise umschließen die Elektroden das Ausgangsteil bzw. Verbundmaterial dicht anliegend.

Bei Ausführung eines Verfahrens zum Herstellen einer 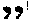 Abformnarbung", wobei ohne Verwendung einer separaten Dekorschicht eine gewünschte Oberflächenstruktur von einer entsprechend strukturieren Oberfläche einer der Elektroden unmittelbar auf eine unverschäumte bzw. wenig verschäumte Oberflächenzone des geschäumten Materials übertragen wird, kann vorgesehen sein, daß die Elektrode mit einem Abdeckelement versehen ist, wobei die Elektrode selbst eine glatte Oberfläche aufweist und das elektrisch nichtleitende Abdeckelement auf der zu dem schäumbaren Material weisenden Seite die gewünschte Oberflächenstruktur besitzt. Durch diese Maßnahme wird das Problem umgangen, daß bei einer strukturierten Oberfläche lokale Feldstärkspitzen und daraus resultierende Durchschläge auftreten können. Weiterhin kann durch eine geeignete Materialwahl für das Abdeckelement, beispielsweise Teflon, ein Ankleben des. schäumbaren Materials verhindert werden.

Wenn keine Dekorfolie verwendet wird und die endgültige, die Sichtseite des fertigen Kunststoffteils bildende Schicht durch eine unverschäumte bzw. wenig verschäumte Oberflächenzone gebildet wird, muß die entsprechend Elektrode gekühlt oder in sonstiger Weise wärmeabführend ausgebildet sein.

Ein Ausgangs-Verbundteil, bestehend aus einem Trägermaterial, einem ungeschäumten schaumfähigen Polymer und ggf. einer Deckschicht aus Dekormaterial, wird in den Zwischenraum 5 eingebracht, wobei hierzu die Elektroden 1, 2 ggf. zur Erleichterung des Einbringens bzw. Herausnehmens vorübergehend auseinanderbewegt werden können.

Zur Einkopplung von HF-Energie wird zunächst mit dem HF-Generator 9, der zweckentsprechend geeignet dimensioniert ist, ein elektrisches Wechselfeld erzeugt und an die Elektroden angelegt. Das zwischen den Elektroden befindliche Material wird so einem elektrischen Wechselfeld ausgesetzt, aus dem es Energie absorbiert und in Wärme umwandelt. Die entnommene Energie wird dabei durch den Generator kontinuierlich ersetzt. Infolge der Erzeugung von Wärmeenergie steigt die Temperatur in dem Verbundmaterial an. Eine wesentliche Voraussetzung ist hier, daß das ungeschäumte, schaumfähige Polymer einen möglichst hohen Absorptionsgrad besitzt, da idealerweise nur in diesem Material (und ggf. der Deckschicht, soweit vorhanden) Wärme erzeugt werden soll.

Infolge der Erwärmung wird ein in dem schaumfähigen Material enthaltenes Treibmittel aktiviert, und das schaumfähige Polymer beginnt aufzuschäumen. Um dem entstehenden Schaum Raum zu gewähren, muß der Elektrodenabstand vergrößert werden. Hierzu wird die Elektrode 1 mittels einer geeigneten Vorrichtung von der ortsfesten Elektrode 2 weggefahren. Im Falle von Hinterschneidungen oder entsprechenden Rundungen im Verbundmaterial kann die bewegliche Elektrode geteilt sein, wobei die Einzelteile dann radial auseinanderfahren können, um einen geeigneten Hohlraum zu erzeugen.

Da die Elektroden nur um den Betrag der entstehenden Schaumhöhe auseinanderfahren müssen, ist die Feldverzerrung an den Schnittkanten in der Regel vernachlässigbar. Zusätzlich ist die Anbringung eines beweglichen Abdeckbleches denkbar, das entstehende Lücken mechanisch und elektrisch verschließt und einer Feldverzerrung vorbeugt.

Die Elektroden fahren kontinuierlich auseinander, wobei ihre Geschwindigkeit der Aufschäumrate des schaumfähigen Polymers angepaßt ist, so daß zu jedem Zeitpunkt ein minimaler Abstand gewährleistet ist. Die Kapazität wird durch die Vergrößerung des Elektrodenabstandes verringert, so daß eine entsprechende Erhöhung der Spannung zwischen den Elektroden notwendig ist, wenn eine konstante Energiedichte erreicht werden soll.

Die Absorptionseigenschaften des Materialverbundes und insbesondere des schaumfähigen Polymers sind in der Regel nicht konstant sondern ändern sich mit der Temperatur. Die erzeugte Wärmeenergie hängt also auch von der bereits erreichten Temperatur ab. Ferner ist davon auszugehen, daß die Wärmekapazität eine Funktion der Temperatur ist. Somit wird auch die Temperaturveränderung pro Zeit von der bereits erreichten Temperatur abhängen. Mit Erweichung des schaumfähigen Polymers und der Aktivierung des Treibmittels wirkt zusätzlich noch die Energiebilanz der Treibmittelreaktion auf die Temperaturänderung ein. Zur Gewährleistung einer bestimmten Aufheizcharakteristik des Verbundmaterials wird daher die Spannung zwischen den Elektroden (und/oder die Frequenz) und damit die Leistung des Generators entsprechend geregelt, ggf. zusätzlich zur Kompensation der Kapazitätsänderung infolge des Auseinanderfahrens der Elektroden.

Zur Realisierung eines möglichst schnellen Prozesses ist es wünschenswert, die Spannung zwischen den Elektroden möglichst groß zu wählen, um ein möglichst kräftiges elektrisches Feld zu erhalten. Die Spannung kann aber nicht beliebig gesteigert werden, da das Material zwischen den Elektroden nur eine endliche Feldstärke zuläßt, ohne eine Bogenentladung zu erzeugen. Diese Durchschlagsfestigkeit hängt von der Art der eingesetzten Materialien und deren Verteilung im zu schäumenden Produkt ab. In jedem Fall ist das Einbringen von leitenden Substanzen insofern zu vermeiden, als daß keine leitende Verbindung zwischen den Elektroden zustande kommen darf, da diese sonst sofort eine Entladung mit starker lokaler Überhitzung produziert. Die Verwendung von fein verteilten leitenden Partikeln (wie Graphitpulver) ist möglich, wobei jedoch auch hierbei die Duchschlagsfestigkeit des Materials deutlich herabgesetzt wird. Ein Vorteil bei der Verwendung solcher Partikel im Bereich des schäumbaren Materials kann die gegenüber einem reinen Dielektrikum stark erhöhte Wärmeerzeugung darstellen, die durch Induktion in den metallischen bzw. leitenden Partikeln erfolgt.

Für die ggf. zusammen mit dem schäumbaren Material eingebrachten zusätzlichen Materialien wie Träger und Dekormaterial ist zweckmäßigerweise eine eingeschränkte Materialauswahl dahingehend zu treffen, daß das Trägermaterial möglichst temperaturstabil sein sollte und das Dekormaterial, sofern vorhanden, sich im elektromagnetischen Feld möglichst stark erwärmen sollte, damit das darunterliegende schaumfähige Material möglichst vollständig aufgeschäumt wird.

Während die Ausführungsform nach Fig. 1 ein Verfahren bzw. eine Vorrichtung für diskontinuierlichen Betrieb erläutert, betreffen die Ausführungsformen nach Fig. 2 bis 4 eine kontinuierliche Betriebsweise. Wie Fig. 2 zeigt, sind die Elektroden 1, 2 so ausgebildet, daß das Ausgangsmaterial 6 in Richtung des Pfeils 10 fortlaufend dazwischen hindurchbewegt werden kann, wobei ein möglichst geringer Abstand bzw. Zwischenraum 5 zwischen Ausgangsmaterial und Elektroden eingehalten wird.

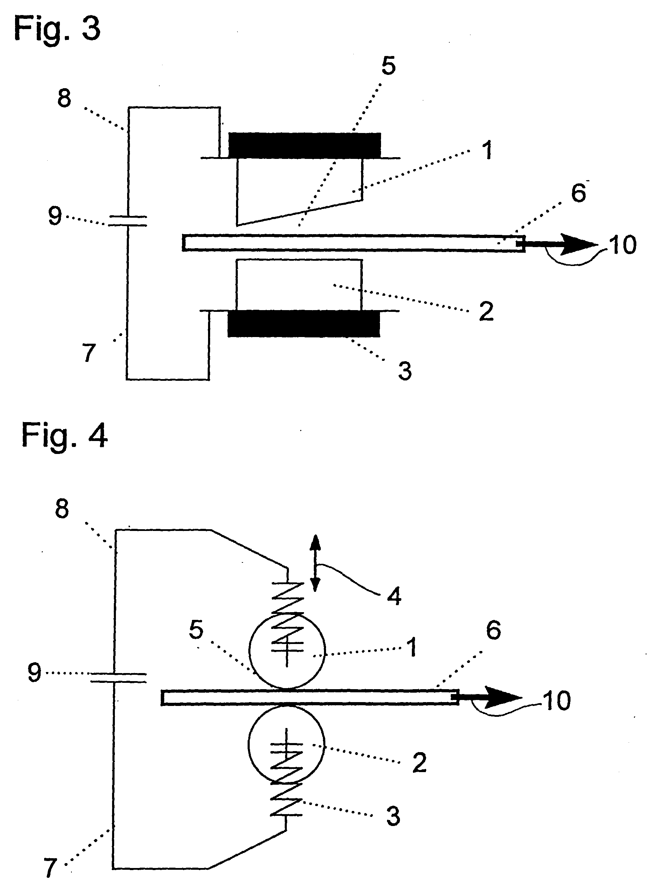

In einer Variante gemäß Fig. 3 ist die obere Elektrode 1 so ausgebildet bzw. angeordnet, daß sich der Zwischenraum 5 zwischen dem durch die Elektroden hindurchgeführten Ausgangsmaterial 6 und der Elektrode 1 in Richtung der Bewegung 10 gezielt verändert (in diesem Beispiel vergrößert), so daß eine bestimmte räumliche Intensitätsverteilung der Hochfrequenzenergie innerhalb des Zwischenraums 5 erzielt wird. Bei der in Fig. 3 dargestellten Vorrichtung nimmt somit die Intensität der Beaufschlagung des Materials in Vorschubrichtung 10 allmählich ab, so daß ein abrupter Übergang vermieden wird.

Bei der in Fig. 4 dargestellten Ausführungsform sind die Elektroden 1, 2 als dreh- und antreibbare Rollen ausgebildet, die das Ausgangsmaterial 6 in Vorschubrichtung 10 vorwärtsbewegen, innerhalb des Zwischenraums 5 mit Hochfrequenzenergie beaufschlagen und außerdem durch formgebenden Kontakt verformen und/oder eine Oberflächenstruktur nach Art einer Abformnabung auf die Oberfläche des schäumbaren Materials übertragen.

Das Verfahren kann im Durchlaufbetrieb oder auch im Batchbetrieb angewendet werden. Das Verfahren ist schnell, führt zu einer homogenen Ausschäumung des Materials und ist sehr gut steuer- und regelbar.

## Patentansprüche

1. Verfahren zum Herstellen eines Kunststoffteils oder Kunststoffverbundteils, mit den Schritten
a) Anordnen eines mindestens eine Schicht eines durch hochfrequente elektrische Energie schäumbaren Materials umfassenden Ausgangsmaterials in einem Zwischenraum (5) zwischen zwei oder mehreren, einander gegenüberstehenden, elektrisch leitenden Elektroden (1, 2),
b) Anlegen eines elektrischen Wechselfeldes an die Elektroden, um Energie in das eingebrachte Ausgangsmaterial und insbesondere in das anregbare, insbesondere in das schäumbare Material einzukoppeln,
dadurch gekennzeichnet, daß eine durch schäumbares Material gebildete Oberfläche des Ausgangsmaterials zumindest bereichsweise während und/oder nach dem Anlagen des Wechselfeldes durch Kontakt mit einem wärmeabführenden Formelement auf einer Temperatur gehalten wird, bei der im wesentlichen kein Aufschäumen erfolgt, so daß eine unverschäumte oder wenig verschäumte Oberflächenzone erzeugt wird.

2. Verfahren zum Herstellen eines Kunststoffteils oder Kunststoffverbundteils, mit den Schritten
a) Anordnen eines mindestens eine Schicht eines durch hochfrequente elektrische Energie schäumbaren Materials umfassenden Ausgangsmaterials in einen Zwischenraum (5) zwischen zwei oder mehreren, einander gegenüberstehenden, elektrisch leitenden Elektroden (1, 2), wobei das Ausgangsmaterial eine ein- oder mehrschichtige Deckschicht, insbesondere Dekorschicht, aufweist, die ganz oder teilweise aus einem polaren Material besteht und/oder leitende Anteile oder Zusätze aufweist,
b) Anlegen eines elektrischen Wechselfeldes an die Elektroden, um Energie in das eingebrachte Ausgangsmaterial und insbesondere in das schäumbare Material und in die Deckschicht einzukoppeln, so daß aufgrund der Erwärmung der Deckschicht das schäumbare Material insbesondere auch in einem der Deckschicht zunächstliegenden Bereich vollständig aufgeschäumt wird.

3. Verfahren nach Anspruch 1 oder 2, dadurch gekennzeichnet, daß der Zwischenraum (5) so klein wie möglich gehalten wird.

4. Verfahren nach einem der Ansprüche 1 bis 3, dadurch gekennzeichnet, daß der Zwischenraum (5) zwischen den Elektroden durch Bewegen mindestens einer Elektrode (1), während das Material aufschäumt, vergrößert wird, bis ein gewünschter Aufschäumzustand erreicht ist.

5. Verfahren nach einem der vorangehenden Ansprüche, dadurch gekennzeichnet, daß mit einem hochfrequenten Wechselfeld im Bereich von ca. 100 kHz bis ca. 1GHz gearbeitet wird.

6. Verfahren nach einem der vorangehenden Ansprüche, dadurch gekennzeichnet, daß als schäumbares Material ein Polymer verwendet wird.

7. Verfahren nach einem der vorangehenden Ansprüche, dadurch gekennzeichnet, daß als schäumbares Material ein ein- oder mehrschichtiges Material verwendet wird, welches einen weichen und/oder harten Schaum ergibt.

8. Verfahren nach einem der vorangehenden Ansprüche, dadurch gekennzeichnet, daß als schäumbares Material ein Material verwendet wird, in dem leitende Partikel, insbesondere Graphit, fein verteilt sind.

9. Verfahren nach einem der vorangehenden Ansprüche, dadurch gekennzeichnet, daß als schäumbares Material ein Material verwendet wird, das polar ist und/oder polare Zumischungen oder Bestandteile enthält.

10. Verfahren nach einem der vorangehenden Ansprüche, dadurch gekennzeichnet, daß als Ausgangsmaterial ein Verbundmaterial verwendet wird, welches aus einer oder mehreren Schichten besteht, wobei mindestens eine Schicht eine relativ hohe Steifigkeit aufweist.

11. Verfahren nach einem der vorangehenden Ansprüche, dadurch gekennzeichnet, daß das relativ steife Material ganz oder teilweise aus einem besonders temperaturstabilen Material besteht.

12. Verfahren nach einem der vorangehenden Ansprüche, dadurch gekennzeichnet, daß das Formelement durch eine Elektrode gebildet wird.

13. Verfahren nach Anspruch 1 oder einem der Ansprüche 3 bis 12, somit auf Anspruch 1 rückbezogen, dadurch gekennzeichnet, daß das Formelement eine strukturierte Oberfläche aufweist, die auf die Oberflächenzone übertragen wird (Abformnarbung).

14. Verfahren nach Anspruch 1 oder einem der Ansprüche 3 bis 12, somit auf Anspruch 1 rückbezogen, dadurch gekennzeichnet, daß das Formelement einen glatten metallischen Träger mit einer elektrisch nichtleitenden, eine strukturierte Oberfläche aufweisenden Abdeckung aufweist, insbesondere aus Teflon, deren Oberflächenstruktur auf die Oberflächenzone übertragen wird.

15. Verfahren nach Anspruch 1 oder einem der Ansprüche 3 bis 14, somit auf Anspruch 1 rückbezogen, dadurch gekennzeichnet, daß das Formelement aktiv gekühlt wird.

16. Verfahren nach Anspruch 1 oder einem der Ansprüche 9 bis 14, somit auf Anspruch 1 rückbezogen, dadurch gekennzeichnet, daß das relativ steife Material gekühlt wird, insbesondere wenn es ganz oder teilweise aus einem polaren Material besteht.

17. Verfahren nach einem der vorangehenden Ansprüche, dadurch gekennzeichnet, daß die Elektroden so geformt sind, daß ihre Oberflächenkontur der Form des Ausgangsmaterials und/oder der Formen des herzustellenden Kunststoffteils entspricht.

18. Verfahren nach einem der vorangehenden Ansprüche, dadurch gekennzeichnet, daß mindestens eine der Elektroden zum Einlegen des Ausgangsmaterials und/oder zum Entnehmen des fertigen Kunststoffteils auseinandergefahren wird.

19. Verfahren nach einem der Ansprüche 4 bis 17, dadurch gekennzeichnet, daß während des Vergrößerns des Zwischenraums (5) die an den Elektroden (1, 2) anliegende Spannung und/oder Frequenz in Abhängigkeit von den Absorptionseigenschaften und/oder Menge und Wärmekapazität des Ausgangsmaterials und/oder von Energiefreisetzungen in dem Ausgangsmaterial und/oder der Temperatur des Ausgangsmaterials gesteuert oder geregelt wird, um die Energiedichte innerhalb des Zwischenraums zu beeinflussen.

20. Verfahren nach einem der vorangehenden Ansprüche, dadurch gekennzeichnet, daß das Ausgangsmaterial kontinuierlich oder diskontinuierlich mittels eines Fördermittels durch den Elektrodenzwischenraum hindurchbewegt wird.

21. Verfahren nach einem der vorangehenden Ansprüche, dadurch gekennzeichnet, daß zwischen den Elektroden Einrichtungen, insbesondere Formen oder Werkzeuge, aus Materialien eingebracht werden, die sich nicht oder kaum im elektromagnetischen Feld erwärmen.

22. Verfahren nach einem der Ansprüche 1 bis 20, dadurch gekennzeichnet, daß zwischen den Elektroden Einrichtungen, insbesondere Formen oder Werkzeuge, eingebracht werden, die Hochfrequenzenergie absorbieren und Wärme an das in den Einrichtungen liegende Ausgangsmaterial abgeben.

23. Verfahren nach Anspruch 21 oder 22, dadurch gekennzeichnet, daß Einrichtungen so geformt sind, daß ihre Oberflächenkontur und/oder Oberflächenstruktur die Form bzw. Oberflächenstruktur des Kunststoffteils bestimmt.

24. Verfahren nach Anspruch 21, 22 oder 23, dadurch gekennzeichnet, daß in oder zwischen den Einrichtungen feste, flüssige oder gasförmige Stoffe und/oder Mischungen aus diesen enthalten sind.

25. Verfahren nach Anspruch 24, dadurch gekennzeichnet, daß als Ausgangsmaterial ein zu polymerisierendes Material, bestehend aus einer oder mehreren Komponenten, in die oder zwischen den Einrichtungen eingebracht wird, und die Polymerisation durch die Hochfrequenzenergie ermöglicht, aktiviert und/oder beschleunigt wird.

26. Vorrichtung zum Herstellen eines Kunststoffteils oder Kunststoffverbundteils, insbesondere zum Durchführen des Verfahrens nach einem der vorangehenden Ansprüche, mit zwei oder mehr einander gegenüberstehenden, elektrisch leitenden Elektroden (1, 2) mit einem Zwischenraum (5) dazwischen, die zum Erzeugen eines hochfrequenten elektrischen Wechselfeldes in dem Zwischenraum mit einem Hochfrequenzgenerator (9) zum Erzeugen einer hochfrequenten Spannung verbunden sind, wobei mindestens eine Elektrode (1) bewegbar gehalten ist, um die Größe des Zwischenraums zu verändern, dadurch gekennzeichnet, daß mindestens eine Elektrode (1, 2) geteilt ausgeführt ist und die einzelnen Teile einzeln oder gemeinsam bewegbar sind, wobei mindestens eine elektrisch leitende, mit einer (jeweiligen) Elektrode leitend verbundene Abdeckung vorhanden ist, um die zwischen beweglichen Elektrodenteilen entstehenden Lücken mechanisch und elektrisch zu schließen.

27. Vorrichtung nach Anspruch 26, dadurch gekennzeichnet, daß die Elektroden (1, 2) (eine) nicht ebene Oberflächenkontur(en) und/oder (eine) strukturierte Oberfläche(n) aufweisen), die der oder denen eines herzustellenden Kunststoffteils entsprechen.

28. Vorrichtung nach Anspruch 27, dadurch gekennzeichnet, daß die Oberflächenkonturen der Elektroden zueinander komplementäre Formen aufweisen, so daß der gegenseitige Abstand einander gegenüberliegender Elektroden im wesentlichen konstant und so klein wie möglich ist.

29. Vorrichtung nach einem der Ansprüche 26 bis 28, dadurch gekennzeichnet, daß die Elektroden lokal unterschiedlichen gegenseitigen Abstand aufweisen, so daß die Energiedichte des elektrischen Feldes von der Position innerhalb des Zwischenraums abhängt (Fig. 3).

30. Vorrichtung nach einem der Ansprüche 26 bis 29, gekennzeichnet durch eine Fördervorrichtung zum Bewegen des Ausgangsmaterials durch den Zwischenraum (5).

31. Vorrichtung nach einem der Ansprüche 26 bis 30, dadurch gekennzeichnet, daß diese für kontinuierlichen oder diskontinuierlichen Betrieb eingerichtet ist.

32. Vorrichtung nach einem der Ansprüche 26 bis 31, dadurch gekennzeichnet, daß zwischen den Elektroden Einrichtungen, insbesondere Formen oder Werkzeuge, angeordnet sind, die sich nicht oder kaum im elektromagnetischen Feld erwärmen.

33. Vorrichtung nach einem der Ansprüche 26 bis 31, dadurch gekennzeichnet, daß zwischen den Elektroden Einrichtungen, insbesondere Formen oder Werkzeuge, angeordnet sind, die Hochfrequenzenergie absorbieren und Wärme an das in den Einrichtungen liegende Ausgangsmaterial abgeben.

34. Vorrichtung nach Anspruch 32 oder 33, dadurch gekennzeichnet, daß in oder zwischen den Einrichtungen feste, flüssige oder gasförmige Stoffe und/oder Mischungen aus diesen enthalten sind.

35. Vorrichtung nach einem der Ansprüche 26 bis 34, dadurch gekennzeichnet, daß die Elektroden als runde und/oder nicht rotationssymmetrische Rollen ausgeführt sind, die eine glatte und/oder strukturierte Oberfläche aufweisen und mit einer definierten und regelbaren Auflagekraft auf das Ausgangsmaterial drückbar sind, mit einer Fördereinrichtung zum Hindurchführen des Ausgangsmaterials durch den Zwischenraum zwischen den Elektroden (Fig. 4).

36. Vorrichtung nach Anspruch 35, dadurch gekennzeichnet, daß die Rollen zum Fördern des Ausgangsmaterials durch den Zwischenraum (5) rotierend antreibbar sind.

37. Vorrichtung nach einem der Ansprüche 26 bis 36, dadurch gekennzeichnet, daß wenigstens eine Elektrode eine Kühleinrichtung aufweist, um zumindest eine Schicht des Ausgangsmaterials zu kühlen.
